Europäisches Patentamt

European Patent Office

Office européen des brevets

(11) Veröffentlichungsnummer: **0 383 962**
**A1**

## EUROPÄISCHE PATENTANMELDUNG

(21) Anmeldenummer: 89102893.8

(22) Anmeldetag: 20.02.89

(51) Int. Cl.⁵: **H02M 3/10, H02M 3/158,
H01J 37/32**

(43) Veröffentlichungstag der Anmeldung:
**29.08.90** Patentblatt **90/35**

(84) Benannte Vertragsstaaten:
**BE CH DE FR GB IT LI LU NL SE**

(71) Anmelder: **HAUZER HOLDING B.V.**
**Groethofstraat 27**
**NL-5900 AE Venlo(NL)**

(72) Erfinder: **Tietema, Roel**
**Odvidiuslaan 1**
**NL-5926 SK Venlo(NL)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**D-8000 München 22(DE)**

(54) **Hochspannungsgleichrichter und zugeordnete Steuerelektronik.**

(57) Es wird ein Hochspannungsgleichrichter beschrieben, der insbesondere im Zusammenhang mit PVD-Beschichtungsprozessen verwendbar ist und ein- oder mehrstufig aufgebaut sein kann. Jede Stufe umfaßt einen Gleichrichter mit nachgeschaltetem Glättungskondensator, einen zur Regelung der Ausgangsspannung dienenden ersten Schalter, eine zur Glättung der Stromwelligkeit bestimmte Drossel, einen zur Glättung der Ausgangsspannung bestimmten Kondensator und einen in Abhängigkeit von auftretenden Überströmen gesteuerten zweiten Schalter. Über den Ausgang einer solchen Stufe ist jeweils eine Freilaufdiode geschaltet, und die Glättungsdrossel ist durch den jeweiligen zweiten Schalter auf einen ersten Freilaufkreis umschaltbar, wobei vor jeder Abschaltung des jeweiligen zweiten Schalters der zugehörige erste Schalter für eine vorbestimmte kurze Zeitdauer in den leitenden Zustand gebracht und dann abgeschaltet wird.

FIG.1

EP 0 383 962 A1

## Hochspannungsgleichrichter und zugeordnete Steuerelektronik

Die Erfindung betrifft einen Hochspannungsgleichrichter, insbesondere zur Verwendung als Bias-Spannungsversorgung in Vakuumprozessen wie PVD-Beschichtungsprozessen, mit einem Eingangstransformator sowie nachfolgenden Gleichrichter-Glättungs- und Schaltereinheiten sowie einer Anordnung zur Schaltersteuerung in Abhängigkeit von auftretenden Überströmen. Ferner ist die Erfindung auf eine insbesondere zur Verwendung im Zusammenhang mit einem solchen Hochspannungsgleichrichter bestimmte Steuerelektronik gerichtet.

Bei PVD-Prozessen kann man im wesentlichen zwischen drei Prozeßphasen unterscheiden, nämlich der Phase der Aufheizung, der Phase des Reinigung und der Beschichtungsphase. Während der Phase der Aufheizung wird durch ionisiertes Gas eine Aufheizung und Reinigung des Produkts vollzogen. Die Metallverdampfer sind dabei nicht eingeschaltet. Der Hochspannungsgleichrichter liefert die Energie zum Plasma. Während der Phase der Reinigung sind die Metallverdampfer eingeschaltet. Mittels Lichtbogen werden Metallionen erzeugt, welche ein Plasma von schweren Ionen bilden. Das Substrat wird hierbei durch den Hochspannungsgleichrichter auf möglichst maximalem Spannungswert gehalten.

In der Beschichtungsphase werden die Ionen vom Metallverdampfer z.B. mit einem Gas vermischt und auf dem Substrat abgelagert. Während dieser Phase soll der Hochspannungsgleichrichter, der eine Spannung von 1.000 Vgs und höher erzeugen kann, eine niedrigere, z.B. weniger als 400 Volt betragende Spannung liefern.

Bei derartigen Beschichtungsprozessen ist das Auftreten von Bogenentladungen auf dem Substrat, welche kurzschlußartige Belastungen für den Hochspannungsgleichrichter darstellen, nicht vermeidbar, und deshalb muß versucht werden, zur Vermeidung der daraus resultierenden schädlichen Auswirkungen solche Bogenentladungen unverzüglich zu detektieren und die anliegende Spannung vom Substrat zu entfernen.

Aufgabe der Erfindung ist es daher, einen Hochspannungsgleichrichter der eingangs angegebenen Art in der Weise auszubilden, daß Bogenentladungen innerhalb sehr kurzer Zeit detektiert werden können, eine unverzügliche Abschaltung nach der Detektierung einer Bogenentladung ermöglicht wird und dabei schädliche Auswirkungen auf dem Substrat verhindert werden.

Gelöst wird diese Aufgabe gemäß der vorliegenden Erfindung im wesentlichen dadurch, daß jeweils ein von einer sekundären Transformatorwicklung gespeister Gleichrichter (VA, VB, VC) mit nachgeschaltetem Glättungskondensator (C1A, C1B, C1C), einem als Gleichstromsteller zur Regelung der Ausgangsspannung dienenden ersten Schalter (S1A, S1B, S1C), einer zur Glättung der Stromwelligkeit bestimmten Drossel (L1A, L1B, L1C) sowie einem zur Glättung der Ausgangsspannung bestimmten Kondensator (C2A, C2B, C2C) und einem in Abhängigkeit von auftretenden Überströmen gesteuerten zweiten Schalter (S2A, S2B, S2C) zu einer Gleichrichterstufe (A, B, C) zusammengefaßt sind, über deren Ausgang eine Freilaufdiode (D3A, D3B, D3C) geschaltet ist, und daß die Glättungsdrossel (L1A, L1B, L1C) durch den jeweiligen zweiten Schalter (S2A, S2B, S2C) auf einen ersten Freilaufkreis (S1A, L1A, D2A; S1B, L1B, D2B; S1C, L1C, D2C) umschaltbar ist, wobei vor jeder Abschaltung des jeweiligen zweiten Schalters (S2A, S2B, S2C) der zugehörige erste Schalter (S1A, S1B, S1C) für eine vorbestimmte kurze Zeitdauer in den leitenden Zustand gebracht und dann abgeschaltet wird.

Durch die Ausgestaltung des Hochspannungsgleichrichters nach der Erfindung ist eine optimale Anpassung an die jeweilige Prozeßphase möglich. Das Zusammenwirken der ersten und zweiten Schalter führt in Verbindung mit den ersten und zweiten Freilaufkreisen dazu, daß auch bei Auftreten sehr hoher Stromabfallraten und damit bei Auftreten hoher Spitzenspannungen auf den Induktivitäten keine zur Zerstörung oder Beschädigung von Schaltelementen, insbesondere Halbleiterelementen führende Betriebszustände auftreten können. Dennoch ist eine Detektierung und Abschaltung einer Bogenentladung innerhalb von Bruchteilen einer Millisekunde ohne weiteres erreichbar. Die Schaltungsanordnung läßt es ferner zu, daß nach dem Abschalten der Bogenentladung die maximale Ausgangsspannung des Gleichrichters sehr schnell wieder erreicht wird.

Ein Aufbau des Hochspannungsgleichrichters aus mehreren gleichartigen Stufen in Form einer Serienschaltung dieser Stufen ist von Vorteil, weil dabei an die einzelnen Komponenten hinsichtlich der Spannungsfestigkeit keine besonders hohen Anforderungen gestellt werden müssen und damit die Verwendung preisgünstiger Komponenten möglich ist.

Besonders vorteilhafte Ausgestaltungen des Hochspannungsgleichrichters nach der Erfindung sind in den Ansprüchen 2 bis 6 angegeben.

Eine mögliche Steuerelektronik für einen vorzugsweise in der bereits beschriebenen Art ausgebildeten Hochspannungsgleichrichter zeichnet sich gemäß der Erfindung aus durch eine Detektor- und Regelschaltung, die in Abhängigkeit vom Auftreten

2

eines Lichtbogens bzw. eines vorgebbaren Maximalstroms eine Umschaltung von der im Normalbetrieb verwendeten Spannungsregelung auf eine Regelung mit Strombegrenzung bewirkt, wobei der Sollwert des Stromes zumindest im wesentlichen gleich dem zuletzt geführten Istwert des Stromes vor dem Auf treten des Lichtbogens entspricht, und eine Rückschaltung auf die Spannungsregelung unter erneuter Einstellung der Ausgangsspannung auf den Maximalwert erfolgt, sobald der Lichtbogen erloschen ist.

Diese Steuerelektronik gestattet es, Verunreinigungen, die Ursache für Bogenentladungen auf dem Substrat sind, gezielt mit begrenzter Leistung wegzubrennen und damit auch zu erreichen, daß die Gesamtzeit des Auftretens von Bogenentladungen verkürzt wird.

Vorteilhafte Ausgestaltungen dieser Steuerelektronik sind in den Unteransprüchen 8 bis 10 angegeben.

Die Erfindung wird nachfolgend anhand von Ausführungsbeispielen unter Bezugnahme auf die Zeichnung im einzelnen erläutert; in der Zeichnung zeigt:

Fig. 1 ein schematisches Blockschaltbild eines Hochspannungsgleichrichters nach der Erfindung,

Fig. 2 ein Blockschaltbild einer Schaltungsanordnung zur Erzeugung der Steuerimpulse für die Schaltungsanordnung nach Fig. 1, und

Fig. 3 ein Blockschaltbild einer Steuerelektronik, die im Zusammenhang mit einem vierstufigen Hochspannungsgleichrichter nach Fig. 1 verwendbar ist.

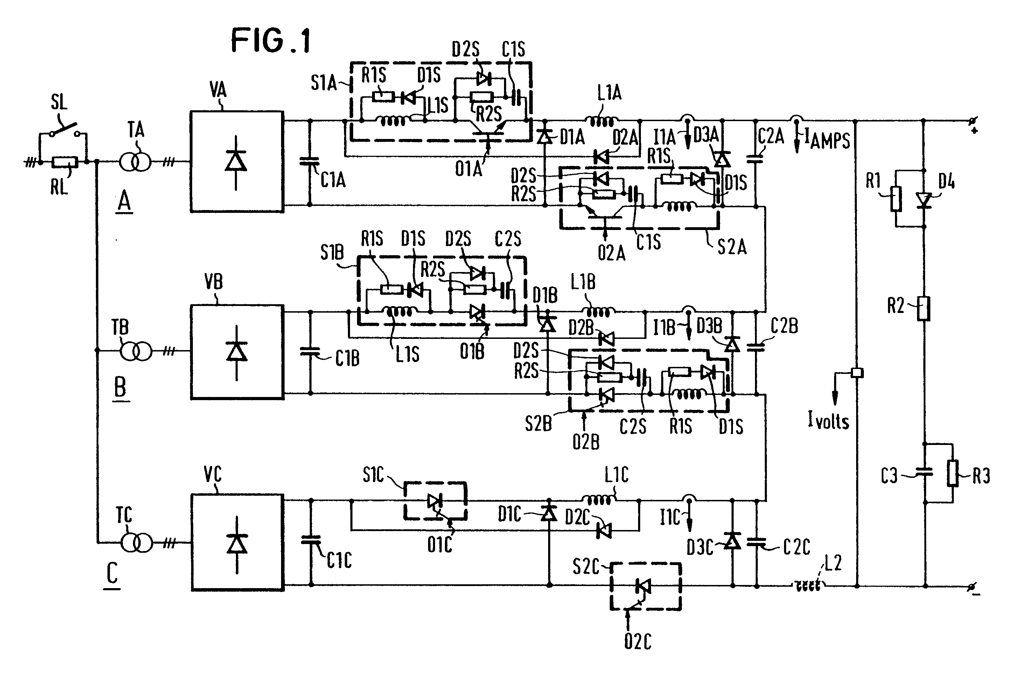

Der Hochspannungsgleichrichter nach Fig. 1 besteht aus mehreren in Reihe geschalteten Stufen, die durch die Buchstaben A, B und C gekennzeichnet sind. Jede Stufe ist dabei prinzipiell gleichartig aufgebaut, obwohl Einzelschaltelemente unterschiedlich sein können.

Jede Stufe A, B, C wird über eine sekundäre Transformatorwicklung gespeist, um eine galvanische Trennung zwischen Netzspannung und Ausgangsspannung sicherzustellen. Dabei können alle Sekundärwicklungen auf einem eigenen Transformator angebracht oder auch auf einem gemeinsamen Transformator angeordnet sein. In Fig. 1 sind beispielsweise drei Einzeltransformatoren TA, TB und TC gezeigt.

Die vom jeweiligen Transformator kommende Sekundärspannung wird durch einen Gleichrichter VA bzw. VB bzw. VC gleichgerichtet und durch jeweils einen nachgeschalteten Glättungskondensator C1A, C1B, C1C geglättet.

Es folgt dann in jeder Stufe ein Schalter S1A bzw. S1B, S1C auf Halbleiterbasis, der im Schaltbetrieb als Gleichstromsteller benutzt wird, um die Ausgangsspannung jeder Stufe zwischen dem Wert Null und dem Maximalwert regeln zu können. In der Stufe A ist dabei ein Transistorschalter verwendet, während in den Stufen B und C GTO-Schalter vorgesehen sind. Wesentlich ist jedoch nur, daß Schalter auf Halbleiterbasis Verwendung finden und diese Schalter geeignet sind, durch einen Steuerimpuls oder mehrere Steuerimpulse abgeschaltet zu werden.

Auf den jeweiligen Schalter folgt eine zur Glättung der Stromwelligkeit bestimmte Drossel L1A bzw. L1B, L1C. Zur Glättung der Ausgangsspannung ist in jeder Stufe ein Glättungskondensator C2A bzw. C2B, C2C vorgesehen.

Von wesentlichem Vorteil ist, daß durch die im praktischen Betrieb verwendete hohe Schaltfrequenz jeweils eine relativ kleine Drossel verwendet werden kann, was im Hinblick auf die angestrebte Kompaktheit des Gleichrichters günstig ist.

Ferner ist in jeder Stufe ein Schalter S2A bzw. S2B, S2C vorgesehen, um den Strom der jeweiligen Stufe bei Auftreten von Bogenentladungen bzw. beim Auftreten von Kurzschlüssen oder großen Überlastungen an den Ausgangsklemmen des gesamten Gleichrichters zu unterbrechen bzw. zu Null werden zu lassen.

Durch diesen Schalter S2A bzw. S2B, S2C wird der Strom in der Drossel L1A bzw. L1B, L1C auf den Freilaufkreis S1-L1-B2 umgeschaltet. Dadurch wird der Ausgangsstrom auf Null reduziert.

Wesentlich ist dabei, daß der Schalter S1A bzw. S1B, S1C im Augenblick vor der Abschaltung von S2A bzw. S2B, S2C für eine bestimmte Zeitdauer von beispielsweise etwa 100 Mikrosekunden leitend gemacht wird, um sicherzustellen, daß der jeweilige Kondensator C1S, C2S, C3S entladen ist, wenn der zugehörige Schalter S1A bzw. S1B, S1C abgeschaltet wird. Diese Maßnahme gewährleistet, daß der zugehörige Schalter nicht beschädigt oder zerstört werden kann.

Eine am Ausgang jeder Stufe A, B, C vorgesehene Freilaufdiode D3A bzw. D3B, D3C stellt sicher, daß jede Stufe für sich, d.h. unabhängig davon betrieben werden kann, ob eine oder mehrere weitere Stufen des Gleichrichters abgeschaltet sind. Zwischen den Ausgangsklemmen des Gleichrichters ist ein RCD-Netzwerk vorgesehen, das als Überspannungsentlastungsglied dient und aus einer Parallelschaltung eines Widerstands R1 mit einer Diode D4, einem dazu in Reihe geschalteten Widerstand R2 und einem im gleichen Serienkreis liegenden Widerstand R3 mit dazu parallelgeschaltetem Kondensator C3 besteht.

Die Ausgangsspannung des Gleichrichters ist mit $I_{volts}$ bezeichnet, und der Ausgangsstrom ist mit $I_{Amps}$ gekennzeichnet. Über diese Größen werden die erforderlichen Steuersignale für die Schalter gebildet.

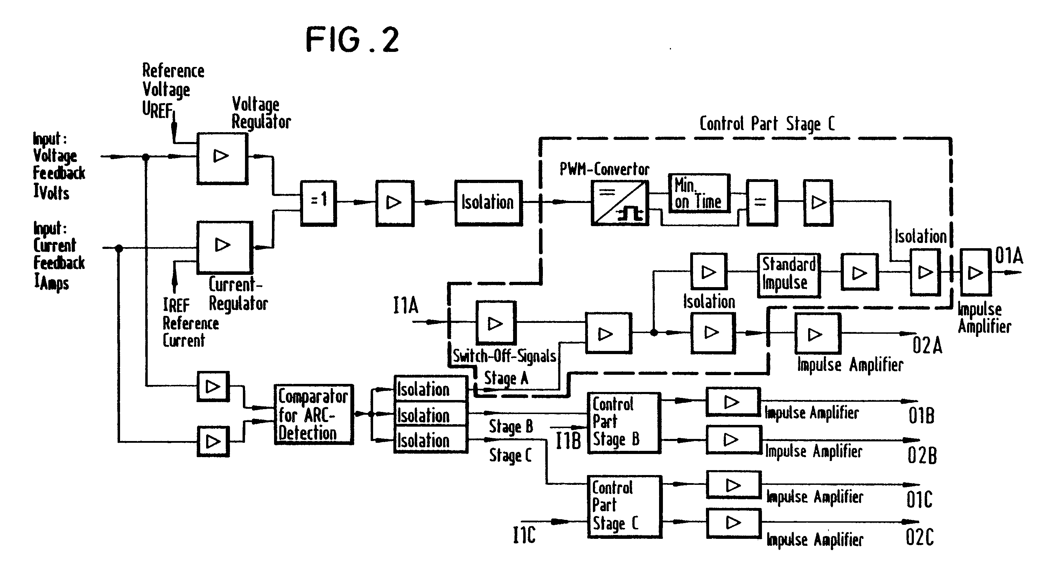

Die Fig. 2 zeigt ein Blockschema eines Beispiels einer Schaltungsanordnung zur Steuersignalgewinnung, wobei die erwähnten Rückkopplungssignale $I_{Volts}$ und $I_{Amps}$ die Eingangssignale bilden.

Die am Ausgang dieser Schaltungsanordnung erhaltenen Signale O1A bzw. O1B, O1C und O2A bzw. O2B, O2C stellen dann die Steuersignale für die Einschaltung und die Ausschaltung der Schalter S1A bzw. S1B, S1C und S2A bzw. S2B, S2C nach Fig. 1 dar.

Zu erwähnen ist noch, daß der bei der Schaltungsanordnung nach Fig. 1 eingangsseitig vorgesehene Widerstand RL einen Ladestrombegrenzungswiderstand für die Glättungskondensatoren C1A, C1B, C1C darstellt. Nach erfolger Aufladung der Kondensatoren wird dieser Widerstand RL mittels des Schalters SL überbrückt.

Nachfolgend wird die Funktionsweise der Schaltungsanordnung nach Fig. 1 erläutert. Die im Ausführungsbeispiel vorgesehenen drei verschiedenen Stufen der Schaltungsanordnung nach Fig. 1 können so ausgelegt sein, daß die Stufe A einen Gleichstrom bei einer Spannung von maximal etwa 200 Volt und die Stufen B und C einen Gleichstrom bei einer Spannung von je maximal etwa 500 Volt liefern. Damit steht gemäß diesem Beispiel am Ausgang eine Gleichspannung von 1200 Volt zur Verfügung. Ebenso möglich wäre es, mit zwei Stufen von je 250 Volt zu arbeiten, so daß für die Beschichtung eine Spannung von 500 Volt zur Verfügung stünde. Die angegebenen Werte stellen dabei nur Beispiele dar.

In der Prozeßphase der Reinigung wird maximale Ausgangsspannung verwendet, d.h., daß während dieser Prozeßphase die GTO-Stufen B und C voll ausgesteuert sind. Dies bedeutet gleichzeitig, daß die ersten Schalter S1B und S1C von Stufe B und Stufe C dauernd im leitenden Zustand sind, während der erste Schalter S1A von Stufe A schaltet und den Ausgangsstrom und die Ausgangsspannung regelt.

Die Stufen B und C gelangen erst außerhalb des Regelbereichs der Stufe A in den Schaltbetrieb, was den Vorteil hat, daß unter normalen Prozeßumständen nur ein Schalten mit Transistoren, d.h. ein Schalten mit etwa 10 kHz erfolgt und damit eine wesentlich geringere Lärmbelastung auftritt als in dem Falle des Schaltens der GTO-Stufen, die mit einer Schaltfrequenz von etwa 2 kHz arbeiten.

Die Bereiche, in denen sich die GTO's im Schaltbetrieb befinden, werden im normalen Betriebsbereich stets schnell durchlaufen.

Nur in der Prozeßphase der Aufheizung kann es vorkommen, daß längere Zeit in einem Zwischengebiet gearbeitet wird, aber dabei ist der Ausgangsstrom relativ klein, so daß auch die von den GTO's verursachte Lärmbelästigung gering bleibt. Beim eigentlichen Beschichtungsvorgang arbeitet nur die Stufe A des Gleichrichters.

Beim Auftreten bzw. Detektieren einer Bogenentladung werden sofort alle Stufen blockiert. Dies führt zu einem Vermeiden des Auftretens von sehr hohen Bogenströmen auf dem Substrat und damit zur Beseitigung der Gefahr einer Beschädigung des jeweiligen Substrats. Im Augenblick des Auftretens einer Bogenentladung kann der Kondensator C1S noch an einer hohen Spannung liegen, da sich dieser Kondensator erst über R2S und den Transistor bzw. den entsprechenden GTO-Schalter entladen muß. Dies ist gleichbedeutend damit, daß dieses Schaltelement wegen der am Ausgang anliegenden Bogenentladung einen sehr großen Strom abschalten muß bei einer hohen wiederkehrenden Spannung. Bei einem solchen Betriebszustand könnte der Halbleiter zerstört oder zumindest beschädigt werden.

Um diese Gefahr zu beseitigen, wird bei Feststellung eines Lichtbogens in der Weise vorgegangen, daß zuerst der Schalter S2 blockiert und zur gleichen Zeit der Schalter S1 während einer kurzen Verzögerungszeit Delta t in den leitenden Zustand gebracht bzw. im leitenden Zustand gehalten wird. Erfolgt die Abschaltung von S2A, so wird der Strom von S2A auf einen Freilaufkreis umgeschaltet, in dem die Drossel L1A, die Diode D2A und der Schalter S1A enthalten sind. Nach Ablauf der Zeitdauer Delta t wird auch der Schalter S1A abgeschaltet und es entsteht dann ein weiterer Freilaufkreis über die Drossel L1A, die Diode D2A, den Kondensator C1A und die Diode D1A. Zusätzlich ist noch ein Freilaufkreis über L1S, D1S und R1S realisiert.

Es wird auf diese Weise erreicht, daß die in der Drossel L1A gespeicherte Energie in den Kondensator C1A zurückgespeist wird.

Die jetzt für die Stufe A geschilderten Vorgänge laufen in den anderen Stufen analog ab.

Beim erneuten Einschalten der Stufe A wird zuerst der Schalter S2A eingeschaltet. Das Einschalten des Schalters S1A erfolgt nach der Einschaltung des Schalters S2A, und dies geschieht vorzugsweise nicht schlagartig, sondern über einen vergleichsweise schnellen Soft-Start.

Die Feststellung einer Bogenentladung erfolgt über das Signal IAmps, wenn dessen Wert einen bestimmten Stromwert überschreitet. Gemäß einer Besonderheit der Erfindung findet die Abschaltung jedoch dann bei einem niedrigen Stromwert statt, wenn die über das Signal IVolts erfaßte Ausgangsspannung ab sinkt. Aufgrund dieser Vorgehensweise wird die Detektierung bezüglich des Auftretens von Bogenentladungen wesentlich empfindlicher. Dabei ist jedoch sichergestellt, daß das Stromabschaltniveau einen bestimmten Minimalwert nicht unterschreitet.

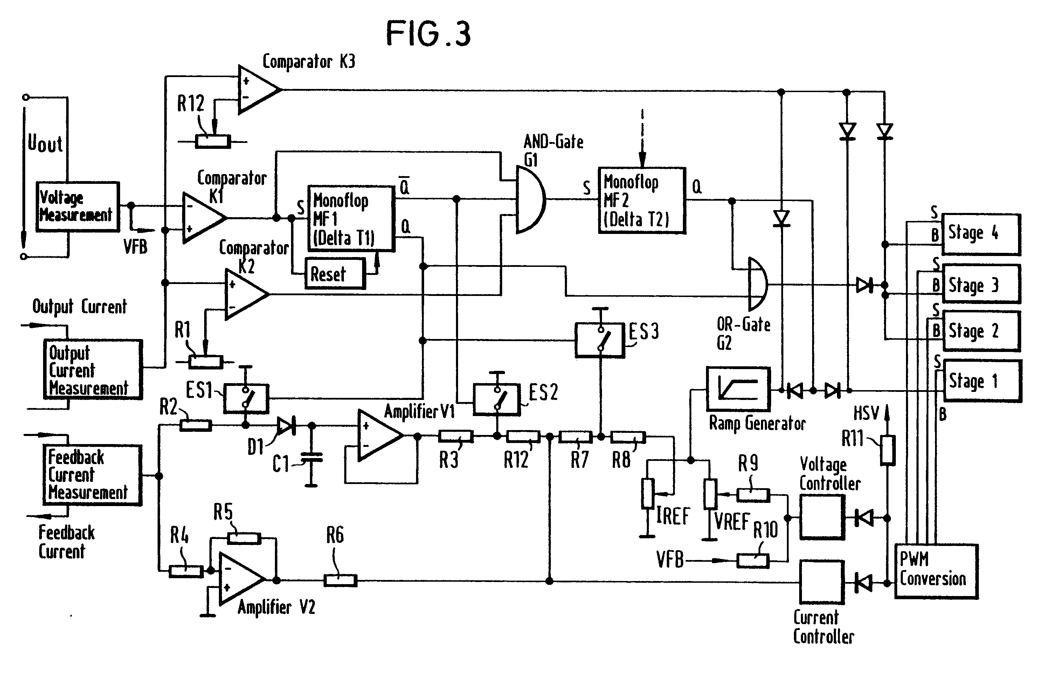

Fig. 3 zeigt eine vorteilhafte Ausführungsform einer Steuerelektronik zur Verwendung im Zusammenhang mit einem Hochspannungsgleichrichter nach Fig. 1.

Diese Steuerelektronik gestattet es, während der Prozeßphase der Reinigung Verunreinigungen auf dem Substrat gezielt mit begrenzter Leistung wegzubrennen. Dies wird dadurch erreicht, daß man die Regelung während des Auftretens einer Bogenentladung in Strombegrenzung arbeiten läßt und als Sollwert des Stromes den Wert des Stromes verwendet, der dem zuletzt geführten Istwert vor dem Auftreten des Bogens entspricht. Nach dem Verschwinden des Bogens wird die Schaltungsanordnung wiederum auf Spannungsregelung umgeschaltet und die Ausgangsspannung auf deren Maximalwert zurückgebracht.

Die Funktionsweise der in Fig. 3 in Form einer Blockschaltung dargestellten Steuerelektronik wird nachfolgend erläutert.

Eingangsseitig wird der jeweilige Istwert der Spannung VFB mit einem vom Ausgangsstrom abgeleiteten Spannungswert in einem Komparator K1 verglichen. Dieser Komparator K1 schaltet bei einem Absinken der Spannung bei einem kleineren Stromwert um als im Falle der Anwesenheit einer hohen Ausgangsspannung, wie dies prinzipiell bereits erläutert worden ist.

Ein Umschalten des Komparators K1 entspricht der Detektierung einer Bogenentladung, bei der bekanntlich die Ausgangsspannung auf einen niedrigen Wert absinkt.

Ein dem Komparator K1 nachgeschaltetes Monoflop MF1 gibt am Ausgang Q einen Impuls logisch 1 ab, wenn der Komparator K1 nach hohem Niveau schaltet. Wird das Niveau von K1 hoch, geht der Ausgang Q auf logisch Null, und der Ausgang Q̄ wird während einer Zeitdauer Delta t1 logisch 1.

Der Istwert des Stromes wird dann, wenn keine Bogenentladung vorhanden ist, d.h. unter normalen Umständen über einen Verstärker V2 und einen Widerstand R6 zu einem Stromregler geführt, während der Sollwert des Stromes über die Widerstände R8 und R7 zum Stromregler gelangt. Treten keine Bogenentladungen auf, so ist ein elektronischer Schalter ES2 geschlossen, wodurch der Verstärker V1 über den Widerstand R3 den Stromregler nicht beeinflußt.

Der Stromregler arbeitet parallel mit einem Spannungsregler, und die Ausgangsspannung dieser beiden Regler wird jeweils in Impulse umgewandelt, welche Gleichrichterstufen 1 bis 4 zugeführt werden, die analog den im Zusammenhang mit Fig. 1 erläuterten Stufen A, B, C ausgebildet sind.

Über das von R2, D1 und C1 gebildete Filter wird ein Kondensator C1 auf einen Wert aufgeladen, der dem zuletzt fließenden Ausgangsstrom vor Auftreten einer Bogenentladung entspricht.

Zu bemerken ist dabei, daß der elektronische Schalter ES1 und auch der elektronische Schalter ES3 immer dann geöffnet ist, wenn keine Bogenentladungen auftreten.

Wird eine Bogenentladung detektiert oder wird wahlweise als Kriterium das Auftreten mehrerer Bogenentladungen während einer bestimmten Zeit definiert und ein solcher Vorgang detektiert, dann schaltet der Komparator K1.

Das hat wiederum zur Folge, daß das Monoflop MF1 schaltet, wodurch wiederum der Schalter ES1 geschlossen und der Schalter ES2 geöffnet wird.

Damit wird der in dem Kondensator C1 gespeicherte Stromwert als Sollwert des Stromes dem Stromregler zugeführt. Der Sollwert IREF wird durch das Schließen von ES3 beseitigt.

In Verbindung damit wird über ein OR-Gatter G2 eine Blockierung aller Ausgangsstufen mit Ausnahme der Stufe 1 bewirkt. Diese Stufe 1 soll nämlich den begrenzten Strom liefern, welcher als Sollwert über C1, R12 zum Stromregler geführt wird.

Eine Stromüberwachung erfolgt mittels eines Komparators K2. Dieser Komparator K2 schaltet, wenn der Strom einen gewissen, über den Widerstand R1 eingestellten Wert überschreitet, aber das Schalten dieses Komparators K2 hat keine Auswirkungen, wenn der Komparator K1 nicht schaltet. In gleicher Weise hat das Schalten des Komparators K2 während der Zeitdauer Delta t1 keine Auswirkungen, weil der Ausgang Q̄ des Monoflops MF1 auf Null steht.

Wenn während der Zeitdauer Delta t1 die Bogenentladung verschwunden ist, kommt das Gerät zurück in die Spannungsregelung, wobei beim Zurückschalten vom Komparator K1 an das Monoflop MF1 ein Resetsignal gegeben wird.

Bleibt während der Zeitdauer Delta t1 die Bogenentladung bestehen und tritt dabei ein Stromwert oberhalb des von R1 bestimmten Niveaus auf, so wird der Ausgang Q des Monoflops MF1 wegen des Ablaufs der Zeit Delta t1 hoch, der Komparator K1 bleibt wegen der weiterhin bestehenden Bogenentladung hoch und der Komparator K2 ist ebenfalls hoch, weil der Strom größer als der über R1 eingestellte Wert ist.

In diesem Falle schaltet auch das AND-Gatter G1 hoch, und es wird der Ausgang Q des Monoflops MF2 für eine Zeitdauer Delta t2 hoch.

Dies hat wiederum zur Folge, daß alle Endstufen, nämlich die Stufen 1 bis 4 blockiert werden und daß die Versorgungsspannung des Sollwerteinstellers somit auch die Sollwerte selbst auf Null gestellt werden.

Nach Ablauf der Zeitdauer Delta t2 besteht Sicherheit darüber, daß Ausgangsspannung und Ausgangsstrom den Wert Null erreicht haben und somit die Bogenentladung erloschen ist.

Die Sollwerte werden dann über einen Rampengenerator mit steilem Anstieg zurück auf die eingestellten Werte gebracht, und es ist wieder die Ausgangsposition des Geräts im Normalbetrieb erreicht.

Ein Komparator K3 dient zur Festlegung eines absoluten Strom-Maximalwertes, bei dessen Überschreitung alle Stufen blockiert werden.

Die beschriebenen Schaltungsanordnungen lassen sich in verschiedener Hinsicht abwandeln, ohne dadurch die Grundüberlegungen der vorliegenden Erfindung zu verlassen. So ist es beispielsweise möglich, anstelle des Rückkopplungssignals IAmps ein Rückkopplungssignal innerhalb einer Einzelstufe abzugreifen, z.B. an der Stelle, wo in Fig. 1 der Wert I1A abgegriffen wird.

**Ansprüche**

1. Hochspannungsgleichrichter, insbesondere zur Verwendung als Bias-Spannungsversorgung in Vakuumprozessen wie PVD-Beschichtungsprozessen, mit einem Eingangstransformator sowie nachfolgenden Gleichrichter-, Glättungs- und Schalteinheiten sowie einer Anordnung zur Schaltersteuerung in Abhängigkeit von auftretenden Überströmen,
dadurch **gekennzeichnet,**
daß jeweils ein von einer sekundären Transformatorwicklung gespeister Gleichrichter (VA, VB, VC) mit nachgeschaltetem Glättungskondensator (C1A, C1B, C1C), einem als Gleichstromsteller zur Regelung der Ausgangsspannung dienenden ersten Schalter (S1A, S1B, S1C), einer zur Glättung der Stromwelligkeit bestimmten Drossel (L1A, L1B, L1C) sowie einem zur Glättung der Ausgangsspannung bestimmten Kondensator (C2A, C2B, C2C) und einem in Abhängigkeit von auftretenden Überströmen gesteuerten zweiten Schalter (S2A, S2B, S2C) zu einer Gleichrichterstufe (A, B, C) zusammengefaßt sind, über deren Ausgang eine Freilaufdiode (D3A, D3B, D3C) geschaltet ist, und daß die Glättungsdrossel (L1A, L1B, L1C) durch den jeweiligen zweiten Schalter (S2A, S2B, S2C) auf einen ersten Freilaufkreis (S1A, L1A, D2A; S1B, L1B, D2B; S1C, L1C, D2C) umschaltbar ist, wobei
vor jeder Abschaltung des jeweiligen zweiten Schalters (S2A, S2B, S2C) der zugehörige erste Schalter (S1A, S1B, S1C) für eine vorbestimmte kurze Zeitdauer in den leitenden Zustand gebracht und dann abgeschaltet wird.

2. Hochspannungsgleichrichter nach Anspruch 1,
dadurch **gekennzeichnet,**
daß der jeweils erste Schalter (S1A, S1B, S1C) und zweite Schalter (S2A, S2B, S2C) aus einem durch einen Steuerimpuls oder mehrere Steuerimpulse abschaltbaren Schalter auf Halbleiterbasis, insbesondere aus einem Transistor oder GTO-Schalter besteht.

3. Hochspannungsgleichrichter nach Anspruch 1 oder 2, dadurch **gekennzeichnet,**
daß parallel zu den Durchlaßstrecken der Schaltorgane der ersten und zweiten Schalter (S1A, S1B, S1C; S2A, S2B, S2C) jeweils eine Reihenschaltung eines Kondensators (C1S, C2S, C3S) und eines Widerstands (R2S) vorgesehen und zum Widerstand (R2S) eine in Durchlaßrichtung des Schaltorgans gepolte Diode (D2S) parallelgeschaltet ist.

4. Hochspannungsgleichrichter nach einem der vorhergehenden Ansprüche,
dadurch **gekennzeichnet,**
daß zumindest zwei gleichartige Gleichrichterstufen (A, B, C) in Serie geschaltet sind.

5. Hochspannungsgleichrichter nach Anspruch 4,
dadurch **gekennzeichnet,**
daß die gleichartigen Gleichrichterstufen (A, B, C) mit einem als Schutz gegen Überspannungen wirkenden RCD-Ausgangs-Netzwerk verbunden sind.

6. Hochspannungsgleichrichter nach einem der vorhergehenden Ansprüche,
dadurch **gekennzeichnet,**
daß in jeder Stufe ein bei abgeschalteten ersten und zweiten Schaltern (S1A, S2A; S1B, S2B; S1C, S2C) wirksamer zweiter Freilaufkreis für die zur Glättung der Stromwelligkeit bestimmte Drossel (L1A; L1B; L1C) vorgesehen ist, der über Dioden (D1A, D2A; D1B, D2B; D1C, D2C) und den jeweiligen eingangsseitigen Glättungskondensator (C1A, C1B, C1C) führt.

7. Hochspannungsgleichrichter nach einem oder mehreren der vorhergehenden Ansprüche,
dadurch **gekennzeichnet,**
daß der Zeitpunkt des Einschaltens des ersten Schalters (S1A, S1B, S1C) bezüglich des Zeitpunkts des Einschaltens des jeweils zweiten Schalters (S2A, S2B, S2C) zeitlich verzögert ist.

8. Hochspannungsgleichrichter nach einem oder mehreren der vorhergehenden Ansprüche,
dadurch **gekennzeichnet,**
daß eine zur Erzeugung der Steuerimpulse (O1A, O2S; O1B, O2B; O1C, O2C) bestimmte Steuerschaltung dem Ausgangsstrom und der Ausgangsspannung entsprechende Signale erhält und Steuerimpulse bei Überschreitung eines vorgebba ren Stromwertes liefert, wobei dieser vorgebbare Stromwert abhängig von einer Spannungsabsenkung erniedrigt wird.

9. Steuerelektronik für einen insbesondere nach einem oder mehreren der vorhergehenden Ansprüche ausgebildeten Hochspannungsgleichrichter,
**gekennzeichnet,**
durch eine Detektor- und Regelschaltung, die in Abhängigkeit vom Auftreten eines Lichtbogens bzw. eines vorgebbaren Maximalstroms eine Umschaltung von der im Normalbetrieb verwendeten Spannungsregelung auf eine Regelung mit Strombegrenzung bewirkt, wobei der Sollwert des Stromes zumindest im wesentlichen gleich dem zuletzt geführten Istwert des Stromes vor dem Auftreten des Lichtbogens entspricht, und eine Rückschaltung auf die Spannungsregelung unter erneuter Einstellung der Ausgangsspannung auf den Maximalwert erfolgt, sobald der Lichtbogen erloschen ist.

10. Steuerelektronik nach Anspruch 9,
dadurch **gekennzeichnet,**
daß beim Übergang auf die Regelung mit Strombegrenzung der mehrstufige Gleichrichterbetrieb auf einstufigen Betrieb umgeschaltet wird.

11. Steuerelektronik nach Anspruch 9 oder 10,
dadurch **gekennzeichnet,**
daß ein zusätzlicher Detektorkreis zur Erfassung einer eine vorgebbare Zeit und/oder einen vorgebbaren Stromwert überschreitenden Bogenentladung vorgesehen ist und daß dieser Detektorkreis alle Gleichrichterstufen blokkiert.

12. Steuerelektronik nach einem der Ansprüche 9 bis 11,
dadurch **gekennzeichnet,**
daß ein Rampengenerator vorgesehen ist, um nach Erlöschen einer die Nullstellung von Ausgangsstrom und Ausgangsspannung bewirkenden Bogenentladung die Sollwerte wieder auf die eingestellten Werte zurückzuführen und den Gleichrichter auf Normalbetrieb zu bringen.

FIG.1

# FIG.2

Reference Voltage UREF

Voltage Regulator

Input: Voltage Feedback IVolts

Input: Current Feedback IAmps

IREF Reference Current

Current-Regulator

Control Part Stage C

PWM-Convertor

Min. on Time

Isolation

=1

=

Isolation

Standard Impulse

Isolation

01A

Impulse Amplifier

I1A

Switch-Off-Signals Stage A

Isolation

02A

Impulse Amplifier

Comparator for ARC-Detection

Isolation
Isolation
Isolation

Stage B

Stage C

Control Part Stage B

I1B

Impulse Amplifier

01B

Impulse Amplifier

02B

Control Part Stage C

I1C

Impulse Amplifier

01C

Impulse Amplifier

02C

EP 0 383 962 A1

# FIG.3

EP 0 383 962 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | GB-A-0983793 (WALTER) <br> * Seite 1, Zeilen 44 - 64; Figur 1 * <br> --- | 1, 2, 4 | H02M3/10 <br> H02M3/158 <br> H01J37/32 |
| A | EP-A-0099725 (STANDARD OIL) <br> * Seite 11, Zeilen 18 - 22; Figur 3 * <br> --- | 1 | |
| A | EP-A-0227042 (MUSZAKI FIZIKAI KUTATO INTEZETE) <br> * Seite 3, Zeilen 15 - 19 * <br> ----- | 1, 2, 8, 9 | |

**RECHERCHIERTE SACHGEBIETE (Int. Cl.5 )**

H02M
H01J
H05H
C23C
B03C
H02H

Der vorliegende Recherchenbericht wurde für alle Patentansprüche erstellt

| Recherchenort | Abschlußdatum der Recherche | Prüfer |
|---|---|---|
| DEN HAAG | 04 OKTOBER 1989 | VAN DEN DOEL J. |